# FASCICULE DE BREVET EUROPEEN

(11) **EP 0 957 589 B1**
(45) Date de publication et mention de la délivrance du brevet: **02.05.2003**
(21) Numéro de dépôt: 98108940.2
(22) Date de dépôt: 15.05.1998
(51) Int. Cl.: H04B 1/38, G04G 1/00

(54) **Système de communication entre une première et une deuxième unité**
System für Kommunikation zwischen zwei Einheiten
System for communication between two units

(43) Date de publication de la demande: 17.11.1999
(73) Titulaire: ASULAB S.A., CH-2501 Bienne (CH)
(72) Inventeur: Pollini, Alexandre, 2034 Peseux (CH); Casagrande, Arnaud, 2000 Neuchâtel (CH)
(74) Mandataire: Balsters, Robert

(56) Documents cités:
- GB-A- 2 171 821
- US-A- 4 063 410
- US-A- 4 419 770
- US-A- 5 652 602

## Description

La présente invention concerne un système de communication entre une première unité telle qu'un ordinateur, notamment de type personnel, ou une montre et une deuxième unité telle qu'un autre ordinateur ou une autre montre.

Le brevet US 5,652,602 décrit le cas d'un système de communication entre une première unité constituant un ordinateur et une deuxième unité constituant une montre. Dans ce cas, la transmission de l'information de l'ordinateur vers la montre est réalisée par l'intermédiaire d'une variation de la longueur d'un segment de ligne apparaissant sur l'écran du moniteur de l'ordinateur personnel, la longueur déterminant la valeur du bit devant être transmis.

Ce système présente un inconvénient important qui réside dans le fait que l'information est codée et véhiculée optiquement de sorte qu'elle ne peut être transmise que si certaines conditions bien particulières sont satisfaites. Par exemple, l'éclairage ambiant doit être suffisamment faible pour ne pas rendre imperceptible pour la montre les variations optiques de l'image du moniteur. En outre, le photocapteur de la montre doit être placé près de l'écran pour pouvoir percevoir correctement l'information. Il faut observer également que cette solution est unidirectionnelle dans le sens ordinateur-montre, ce qui limite singulièrement les possibilités d'emploi du système.

On connaît également les systèmes de transmission à rayons infrarouges, bien connus notamment pour la télécommande de toutes sortes d'appareils domestiques tels que les téléviseurs, les chaînes haute-fidélité etc. Dans ce cas, la directivité du rayonnement porteur de l'information est limitée, parce que les deux unités (la télécommande et l'appareil) doivent avoir un contact visuel ce qui constitue un sérieux handicap. De plus, la liaison ne peut se faire que de la télécommande vers l'appareil en question, le système étant de ce fait également unidirectionnel.

Il est également connu, notamment du document GB-A-2 171 821, l'utilisation d'une montre électronique équipée d'un système de communication radio. Une telle montre électronique comprend un circuit électronique pour émettre et recevoir des signaux radios, une communication bidirectionnelle pouvant être établie entre deux montres similaires.

L'invention a pour but de fournir un système de communication entre une première unité, par exemple une montre, et une deuxième unité telle qu'un ordinateur, notamment personnel, qui soit dépourvu des inconvénients des systèmes de communication de la technique antérieure.

L'invention a également pour but de fournir un tel système qui soit efficace et simple à réaliser.

Elle a donc pour objet un système de communication entre une première unité (U1) et une deuxième unité (U2), chacune des unités comprenant un émetteur/récepteur à ondes radio (12, 19) travaillant avec une porteuse à haute fréquence commune, destinée à véhiculer l'information à envoyer à l'autre unité, et une base de temps (1, 20) à partir de laquelle est dérivée ladite porteuse; lesdites bases de temps (1, 20) des premières et deuxièmes unités présentant des dérives de fréquence au moins approximativement égales, caractérisé en ce que ledit émetteur/récepteur (12, 19) de chacune des unités est conçu de manière à pouvoir engendrer une pluralité de porteuses haute fréquence et en ce que chacune des unités comprend des moyens de sélection (14), parmi ladite pluralité de porteuses à haute fréquence, d'une porteuse commune de travail, pour émettre et recevoir ladite information.

Des caractéristiques complémentaires de l'invention résultent des sous-revendications.

D'autres caractéristiques et avantages de l'invention apparaîtront au cours de la description qui va suivre, donnée uniquement à titre d'exemple et faite en se référant aux dessins annexés sur lesquels :
- la figure 1 représente un schéma sous forme de blocs fonctionnels d'un exemple de système de communication entre un appareil portable et un ordinateur, selon l'invention, et
- la figure 2 est un schéma simplifié d'un bloc de gestion utilise dans le système de communication représenté sur la figure 1.

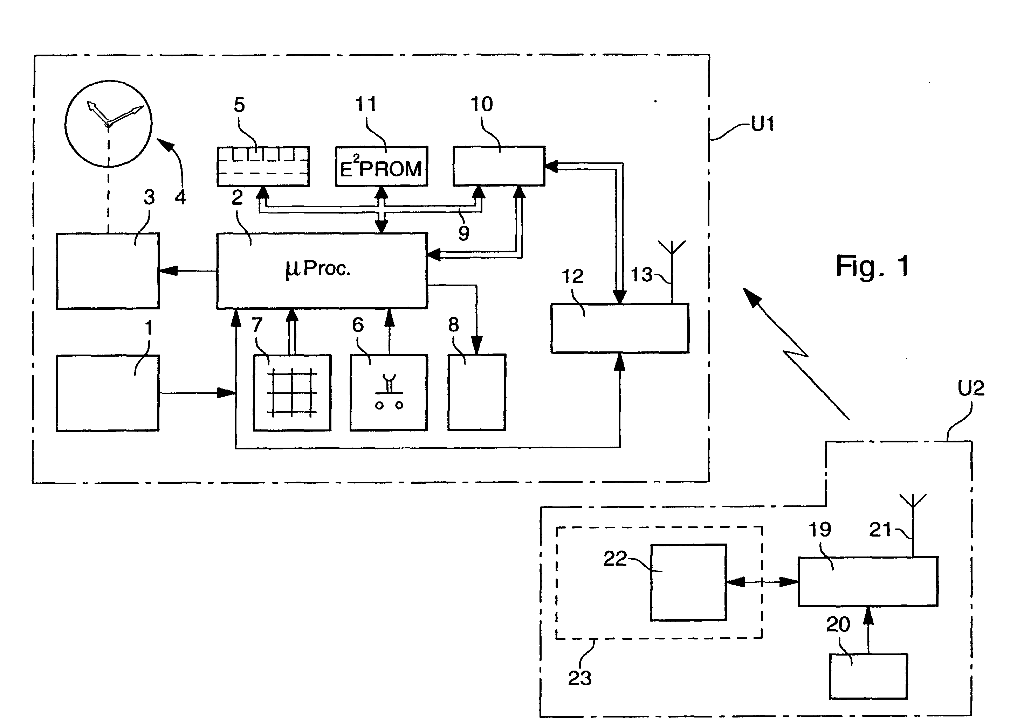

Dans l'exemple de réalisation de l'invention représenté sur la figure 1, le système de communication selon l'invention comprend une première unité U1 pouvant être portée par une personne. En particulier, cette unité peut être formée par une montre bracelet ou tout autre dispositif électronique portable équipé selon les préceptes de l'invention. Toutefois, cette unité n'est pas limitée à un appareil portable.

Le système de communication comporte également une seconde unité U2, formée dans cet exemple par un ordinateur quelconque, de préférence un ordinateur personnel usuel. Toutefois, cet deuxième appareil peut également être formé par une montre permettant alors la communication entre deux montres.

Dans l'exemple représenté où l'unité U1 est une montre, celle-ci comprend tout d'abord les organes habituels qui sont une base de temps 1 pilotée par un quartz utilisé comme standard de fréquence, un microprocesseur de gestion 2, un moteur 3 commandé par l'intermédiaire de ce microprocesseur de gestion 2 et un dispositif d'affichage à aiguilles 4 entraîné par ce moteur et destiné à indiquer l'heure. La montre U1 comprend également au moins un affichage alphanumérique 5. Ce dernier peut comprendre plusieurs champs pour permettre l'affichage d'informations diverses relatives au temps (jour, date, mois etc.), des informations concernant les fonctions de la montre et également de préférence des informations personnelles telles que celles relatives à un agenda (calendrier, rendez-vous, anniversaires, numéros de téléphone, répertoire d'adresses etc.). Ce sont en particulier ces dernières informations qui peuvent faire l'objet d'un échange entre les deux unités U1 et U2.

Les fonctions de la montre U1 peuvent être activées de la manière habituelle à l'aide d'un ou de plusieurs boutons de commande, de type séquentiel par exemple, symbolisés par le bloc 6. Un tel bouton peut servir notamment à activer et/ou désactiver le mode de lecture ou d'édition des informations relatives à la montre ou à l'agenda et le mode de communication de la montre U1.

Celle-ci est encore équipée d'un dispositif 7 d'introduction d'informations alphanumériques, avantageusement formé par des touches capacitives incorporées dans le verre. Ce dispositif sera appelé ci-après "clavier" par soucis de simplification. De tels dispositifs sont connus en soi des spécialistes de l'horlogerie, voir par exemple la demande de brevet européen EP 0 838 737 au nom de la présente Demanderesse.

Un dispositif d'alarme sonore 8 peut compléter l'unité U1. Ce dispositif peut être enclenché par différents événements tels que : rendez-vous, anniversaire, réveil etc..

Il est à noter que l'unité U1 du système de communication selon l'invention peut comporter tout ou partie seulement des organes qui viennent d'être décrits. Par exemple, si l'unité U1 est une montre, elle pourrait ne pas être équipée d'un affichage à aiguilles et de son moteur associé et/ou d'un dispositif d'alarme sonore, par exemple. Si l'unité U1 est un autre appareil portable, par exemple une calculette, une unité de documentation, comme un dictionnaire multilangues par exemple, ou encore un agenda électronique etc., elle peut ne pas comprendre certains organes réalisant le garde-temps. Cependant, il est essentiel pour la mise en oeuvre de l'invention que la base de temps ou standard de fréquence 1 est présent. Il est souhaitable qu'il soit thermocompensé.

Ceci étant, l'unité U1 comprend également un bus 9 de communication interne assurant l'échange d'information entre le microprocesseur 2, l'affichage alphanumérique 5, un bloc de gestion 10 et une mémoire de données 11 qui est de préférence du type non-volatile, par exemple un EEPROM. Une telle mémoire a l'avantage d'être moins sensible aux chocs et de garder l'information en cas de panne d'alimentation (changement de pile) par rapport à une mémoire volatile. Toutefois, l'utilisation d'une mémoire volatile est évidement également possible.

L'unité U1 est équipée aussi d'un circuit émetteur/récepteur radio 12 capable de porter des données sur au moins une porteuse haute fréquence modulée par ces données et d'envoyer cette porteuse ainsi modulée sur une antenne 13 incorporée dans l'unité U1. Bien entendu, selon des techniques connues, l'émetteur/récepteur est également capable de démoduler un message reçu pour en extraire l'information utile.

Selon une caractéristique importante de l'invention, l'émetteur/récepteur 12 est conçu de manière à pouvoir engendrer une pluralité de porteuses à haute fréquence, la sélection de la porteuse envoyée sur l'antenne 13 étant assurée par le bloc de gestion 10. Ces porteuses à haute fréquence sont toutes pilotées par la base de temps 1 dont, dans l'exemple décrit, la stabilité assure également la précision de l'heure fournie par la montre. Il en résulte une bonne stabilité en fréquence de chacune des porteuses produites dans la montre U1.

La mémoire 11 est de préférence organisée en pages composées de paquets de données qui transitent sur la liaison haute fréquence. Elles peuvent avoir par exemple une taille de 64 bytes. Cette mémoire peut être écrite ou lue d'abord par l'intermédiaire du microprocesseur 2, les données introduites dans la mémoire provenant alors du clavier 7 et les données lues étant transmises à l'affichage 5 également par l'intermédiaire du microprocesseur 2. Mais la mémoire 11 peut également être utilisée par le bloc de gestion 10 qui peut y inscrire des données en provenance de l'émetteur/récepteur 12 et qui peut y lire des données pour les envoyer vers cet émetteur/récepteur 12.

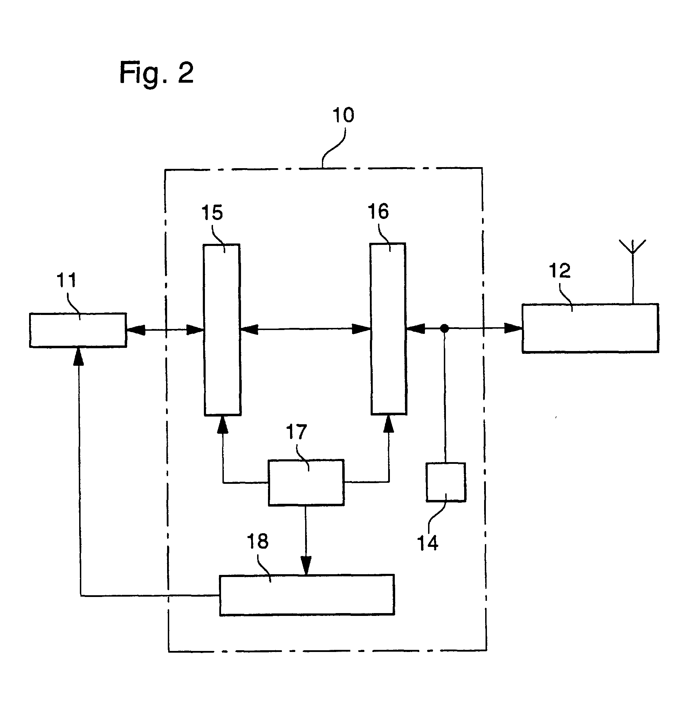

Comme représenté sur la figure 2, le bloc de gestion 10 comprend un bloc de sélection de fréquences 14 destiné à commander la fréquence de la porteuse sur laquelle travaille l'émetteur/récepteur 12.

On comprend que la possibilité de communiquer sur l'une parmi une pluralité de porteuses permet, dans un même rayon d'action, qu'une pluralité de systèmes de communication selon l'invention puisse assurer des échanges de données au niveau de chaque système, sans perturber l'échange d'information au niveau des autres systèmes présents dans ce même rayon d'action. A cet effet, chaque système de communication se cale sur une porteuse sélectionnée parmi les porteuses encore libres dans l'espace où sont présents les systèmes, la porteuse étant de nouveau disponible pour les autres systèmes dès que le système l'ayant occupée a terminé sa communication.

A titre d'exemple seulement, on peut choisir des porteuses ayant les fréquences suivantes : 433,245 MHz, 433,845 MHz et 434,445 MHz, une fréquence différente et un nombre différent de fréquences pouvant naturellement être envisagé.

Le bloc de gestion 10 a aussi pour fonction de former une interface entre la mémoire 11 et l'émetteur/récepteur 12. Dans le mode de réalisation décrit et représenté, il comporte un premier registre 15 de communication avec la mémoire 11 et un second registre 16 de communication avec l'émetteur/récepteur 12, les deux registres échangent leurs contenus sous l'action d'un séquenceur 17. Ce séquenceur 17 est connecté également à un compteur de pages 18 qui pointe les pages de données dans la mémoire 11.

Ainsi, lorsque l'émetteur/récepteur 12 est en émission vers l'unité U2, le bloc de gestion 10 lit les données correspondant à une page mémoire dans la mémoire 11 puis les transmet par l'intermédiaire des registres 15 et 16 vers l'émetteur/récepteur 12 sous la commande du séquenceur 17. Le compteur de pages 18 est incrémenté d'une unité, puis la page suivante est lue dans la mémoire, et ainsi de suite jusqu'à ce que la dernière page occupée dans la mémoire 11 est lue. Inversement, lorsque l'émetteur/récepteur 12 est dans le mode de réception, celui-ci transmet les données lui arrivant par paquets de la taille d'une page mémoire, au bloc de gestion 10 qui se charge de les transmettre vers la mémoire 11 via les deux registres 15 et 16, également sous la commande du séquenceur 17, pour que les données puissent être écrites dans la mémoire, le contenu du compteur 18 étant naturellement mis a jour après chaque paquet.

Il est à noter qu'avantageusement, la transmission des données entre les unités U1 et U2 est réalisée selon un protocole qui définit dans le flux de données transmis une succession de paquets de données, de 64 bytes chacun par exemple, correspondant dans cet exemple à la taille d'une page de la mémoire 11, chaque paquet pouvant comprendre en outre un préambule de synchronisation et de reconnaissance, et un bloc d'identification comportant notamment un code identifiant l'unité U1 ou U2 émettant l'information et l'unité U2 ou U1 devant la recevoir.

L'unité U2 du système de communication selon l'invention comprend un bloc d'émission/réception 19, électriquement identique au bloc 12 de l'unité U1, capable d'engendrer au moins une porteuse pilotée par une base de temps ou standard de fréquence 20 à quartz, de préférence thermocompensé. Le bloc d'émission/réception 19 est pourvue d'une antenne 21.

Avantageusement, le système de communication selon l'invention peut fonctionner selon un protocole de maître/esclave. Dans ce cas, à l'ouverture de la communication entre les deux unités, on définit qui sera maître et qui sera esclave. Toutefois, dans le cas d'un système comprenant un ordinateur et une montre, on peut définir préalablement l'ordinateur comme étant le maître, et la montre l'esclave. Ainsi, on peut prévoir un bloc de gestion 10 dans la montre qui est plus simple et qui permet donc de réduire la consommation de la montre. En effet, l'ordinateur maître U2 va commander la synchronisation de communication et va envoyer au bloc de gestion 10 de la montre esclave U1 un paquet de données comportant une commande indiquant si ce bloc 10 doit effectuer une lecture ou une écriture des données dans sa mémoire 11. Ce bloc de gestion 10 doit donc uniquement gérer le sens de transfert des données entre l'émetteur/récepteur 12 et la mémoire. Avantageusement, le bloc de gestion 10 est agencé de telle façon que lorsque l'utilisateur de la montre active le mode de communication en agissant sur le bouton de sélection 6, le bloc de sélection 14 balaye séquentiellement toutes les fréquences de porteuse. Si le bloc de gestion 10 reconnaît dans un message véhiculé sur l'une de ces porteuses, son propre code d'identification, il verrouille automatiquement l'émetteur/récepteur 12 sur cette porteuse. Si au bout d'un intervalle prédéterminé aucun message n'a été reconnu, le mode de communication de la montre est automatiquement désactivé, ceci pour économiser de l'énergie.

Bien entendu, l'homme du métier sait qu'il est possible de faire fonctionner chacune des unités U1 et U2 en tant que maître et esclave s'il le désire par une simple adaptation de la programmation du protocole et/ou des composants électriques tels que les blocs de gestion.

Selon une caractéristique importante de l'invention, les bases de temps 1 et 20 ont des dérives en fréquence au moins approximativement égales. De cette manière, les fréquences de travail des émetteurs/récepteurs 12 et 19 auront toujours des valeurs de fréquence porteuse les plus proches possible les unes des autres, ce qui permet à une unité U1 de toujours trouver une unité U2, quelque soit l'environnement notamment en ce qui concerne la température.

A cet effet, les bases de temps peuvent être identiques de sorte que les fréquences porteuses générées à partir de chaque base de temps auront une dérive relative zéro, car on aura une annulation relative de leurs dérives. Toutefois, il est également possible d'avoir de bases de temps différentes, mais qui ont des circuit de compensations thermique différents adaptés aux dérives de sorte qu'un obtient à nouveau une dérive relative zéro entre les deux fréquences porteuses.

Si l'unité U2 est un ordinateur personnel, les blocs 19 et 20 ainsi que l'antenne 21 sont formés de préférence par un composant matériel enfichable dans l'un des ports de l'ordinateur, comme si c'était un périphérique habituel de l'ordinateur tel qu'une imprimante ou un lecteur de support d'information (disquette ou cédérom par exemple). De préférence, ce composant est conforme au standard informatique utilisé (par exemple USB, Universal Standard Bus, Plug&Play ou RS232). Dans ces conditions, ce composant peut être mis en oeuvre dans l'ordinateur personnel U2 de la même façon que tout autre composant enfichable moyennant l'utilisation d'un programme pilote (driver) 22 et d'un programme d'application 23 permettant à l'ordinateur de gérer la production des flux de données selon le protocole de transmission choisi tant pour l'émission des données que pour la réception de celles-ci.

Selon une autre caractéristique importante de l'invention, le bloc d'émission/réception 19 de l'unité U2 est de préférence agencé pour pouvoir d'abord détecter les porteuses déjà occupées par d'autres systèmes de communication situés dans son rayon d'action, puis de se caler sur une porteuse libre parmi celles susceptibles d'être utilisées par tous les autres systèmes situés dans le même rayon d'action.

On constate ainsi qu'à l'aide d'un système de communication selon l'invention, de l'information peut être échangée entre les deux unités U1 et U2 avec une grande fiabilité même si dans un même espace plusieurs systèmes analogues sont utilisés en même temps.

Il est donc possible de transmettre des données soit entre une montre et un ordinateur, soit entre deux montres, soit entre deux ordinateurs. Ainsi, dans un cas pratique, il est possible de transmettre par exemple l'agenda de la semaine courante ou les coordonnées des personnes mémorisées dans une première unité vers la deuxième unité.

Il s'est avéré qu'un système de communication selon l'invention se prête particulièrement bien à l'échange d'information entre une montre portée au poignet et un ordinateur personnel, l'acquisition, la modification et l'édition des données pouvant se faire à l'aide de la montre alors que le porteur est éloigné de son ordinateur personnel. Ainsi par exemple, l'utilisateur peut noter des rendez-vous ou enregistrer d'autres informations importantes, puis une fois rentré à son lieu de travail enregistrer ces informations dans son ordinateur personnel. Inversement, des informations acquises dans l'ordinateur, dans l'agenda ou même venant d'une autre application, par exemple d'un navigateur d'Internet, peuvent être "transportées" dans la montre et consultées à tout moment alors que l'utilisateur est éloigné de son poste de travail.

Bien entendu, l'invention n'est pas limitée au mode de réalisation décrit ci-dessus qui n'a été donné qu'à titre d'exemple. Ainsi, il est à noter que plusieurs modifications et/ou améliorations peuvent être apportées au système de communication selon l'invention sans sortir du cadre de celle-ci.

## Revendications

1. Système de communication entre une première unité (U1) et une deuxième unité (U2), chacune des unités comprenant un émetteur/récepteur à ondes radio (12, 19) travaillant avec une porteuse à haute fréquence commune, destinée à véhiculer l'information à envoyer à l'autre unité, et une base de temps (1, 20) à partir de laquelle est dérivée ladite porteuse; lesdites bases de temps (1, 20) des premières et deuxièmes unités présentant des dérives de fréquence au moins approximativement égales, **caractérisé en ce que** ledit émetteur/récepteur (12, 19) de chacune des unités est conçu de manière à pouvoir engendrer une pluralité de porteuses haute fréquence et **en ce que** chacune des unités comprend des moyens de sélection (14), parmi ladite pluralité de porteuses à haute fréquence, d'une porteuse commune de travail, pour émettre et recevoir ladite information.

2. Système de communication suivant la revendication 1, **caractérisé en ce qu'**au moins ladite deuxième unité (U2) est agencée de manière à ce que ses moyens de sélection sélectionnent la fréquence d'une porteuse commune de travail et **en ce qu'**au moins la première unité (U1) est agencée de manière à ce que ses moyens de sélection balaient les fréquences de ladite pluralité de porteuses afin de détecter la porteuse commune de travail sélectionnée par ladite deuxième unité.

3. Système de communication suivant la revendication 2, **caractérisé en ce qu'**au moins ladite deuxième unité (U1) est en outre agencée pour pouvoir détecter les porteuses occupées parmi ladite pluralité de porteuses, et **en ce que** ladite porteuse commune de travail est une porteuse libre.

4. Système de communication suivant la revendication 1, **caractérisé en ce que** ladite deuxième unité (U2) est définie comme unité maître et est agencée de manière à ce que ses moyens de sélection sélectionnent la fréquence d'une porteuse commune de travail, et **en ce que** ladite première unité (U1) est définie comme unité esclave et est agencée de manière à ce que ses moyens de sélection balaient les fréquences de ladite pluralité de porteuses afin de détecter la porteuse commune de travail sélectionnée par ladite unité maître.

5. Système de communication suivant la revendication 4, **caractérisé en ce que** l'unité maître (U2) est en outre agencée pour pouvoir détecter les porteuses occupées parmi ladite pluralité de porteuses, et **en ce que** ladite porteuse commune de travail est une porteuse libre.

6. Système de communication suivant l'une des revendications 2 à 5, **caractérisé en ce qu'**au moins ladite première unité (U1) comprend en outre des moyens (6) pour activer le balayage des moyens de sélection (14), ce balayage des moyens de sélection étant désactivé au bout d'un intervalle déterminé si aucun message n'est reconnu.

7. Système de communication suivant l'une des revendications 1 à 6, **caractérisé en ce que** ladite première unité (U1) est une montre dont la base de temps sert à la fois pour fournir le standard de fréquence de garde temps et pour la dérivation de ou des porteuse(s) à haute fréquence.

8. Système de communication suivant l'une quelconque des revendications 1 à 7, **caractérisé en ce que** ladite seconde unité (U2) est un ordinateur personnel.

9. Système de communication suivant l'une quelconque des revendications précédentes, **caractérisé en ce que** lesdites bases de temps (1, 19) sont thermocompensées.

10. Système de communication suivant l'une quelconque des revendications précédentes, **caractérisé en ce que** ladite information à échanger entre les deux unités (U1, U2) est codée sur ladite porteuse commune de travail par paquets d'information, et **en ce que** ladite unité (U1) comprend des moyens (2, 10, 11) d'enregistrement ou de lecture de ladite information en fonction du type et de la taille desdits paquets.

11. Système de communication suivant la revendication 10, **caractérisé en ce que** lesdits moyens d'enregistrement comprennent une mémoire organisée par pages (11) dans laquelle lesdits paquets d'information sont enregistrés à raison d'un paquet par page.

12. Système de communication suivant la revendication 11, **caractérisé en ce que** ladite mémoire de pages (11) est une mémoire de type non-volatile.

13. Système de communication suivant la revendication 11 ou 12, **caractérisé en ce que** lesdits moyens d'enregistrement ou de lecture comprennent en outre des premier (15) et second (16) registres de communication, respectivement, avec ladite mémoire (11) et avec ledit émetteur-récepteur (12, 19), et un séquenceur (17) pour échanger le contenu desdits registres.

14. Système de communication suivant la revendication 13, **caractérisé en ce que** ledit séquenceur est connecté à un compteur de pages (18) qui pointe lesdites pages de données dans la mémoire (11).

15. Système de communication suivant la revendication 8, **caractérisé en ce que** ledit ordinateur personnel (U2) comporte un programme d'application (23) dédié au traitement de ladite information en vue de son émission ou réception par ledit émetteur/récepteur et en vue de son exploitation après réception ou émission par ledit émetteur/récepteur et **en ce que** ledit programme d'application est en communication avec ledit émetteur/récepteur (19) par l'intermédiaire d'un programme pilote (22).

16. Système de communication suivant la revendication 15, **caractérisé en ce que** ledit émetteur/récepteur (19) et ladite base de temps (20) de ladite seconde unité (U2) sont montée dans un composant enfichable dans un port de périphérique de cette seconde unité.

## Claims

1. System for communicating between a first unit (U1) and a second unit (U2), each of the units including one radio wave transceiver (12, 19) working with one common high frequency carrier wave and intended to carry the data to be sent to the other unit, and a time base (1, 20) from which said carrier wave is derived, said time bases (1, 20) of first and second units have at least approximately equal frequency drifts, **characterized in that** said radio wave transceiver (12, 19) of each of the units is designed to be able to generate a plurality of high frequency carrier waves and **in that** each of the units includes selection means (14), among said plurality of high frequency carrier waves, of a common operating carrier wave, for emitting and receiving said data.

2. Communication system according to claim 1, **characterized in that** at least said second unit (U2) is arranged in a manner that its selection means select the frequency of a common operating carrier wave and **in that** at least the first unit (U1) is arranged in a manner that its selection means scan the frequencies of said plurality of carrier waves in order to detect the common operating carrier wave selected by said second unit.

3. Communication system according to claim 2, **characterized in that** at least said second unit (U2) is also arranged to be able to detect the carrier waves occupied among said plurality of carrier waves, and **in that** said common operating carrier wave is free carrier wave.

4. Communication system according to claim 1, **characterized in that** said second unit (U2) is defined as master unit and is arranged in a manner that its selection means select the frequency of a common operating carrier wave, and **in that** said first unit (U1) is defined as slave unit and is arranged in a manner that its selection means scan the frequencies of said plurality of carrier waves in order to detect the common operating carrier wave selected by said master unit.

5. Communication system according to claim 4, **characterized in that** said master unit (U2) is also arranged to be able to detect the carrier waves occupied among said plurality of carrier waves and **in that** said common operating carrier wave is free carrier wave.

6. Communication system according to any of claims 2 to 5, **characterized in that** at least said first unit (U1) further includes means (6) for activating scan of selection means, this scan of selection means being deactivated if after a determined interval no message has been recognised.

7. Communication system according to any of claims 1 to 6, **characterized in that** said first unit (U1) is a watch whose time base is used both to provide the timekeeping frequency standard and for the derivation of the high frequency carrier wave or waves.

8. Communication system according to any one of claims 1 to 7, **characterized in that** said second unit (U2) is a PC.

9. Communication system according to any one of the preceding claims, **characterized in that** said time bases (1, 20) are thermocompensated.

10. Communication system according to any one of the preceding claims, **characterized in that** said data to be exchanged between the two units (U1, U2) is coded on said carrier wave by blocks of data and **in that** said unit (U1) includes means (2, 10, 11) for recording or reading said data as a function of the type and size of said blocks.

11. Communication system according to claim 10, **characterized in that** said recording means include a memory organised by pages (11) in which said data blocks are recorded at the rate of one block per page.

12. Communication system according to claim 11, **characterized in that** said page memory (11) is a non-volatile type memory.

13. Communication system according to claim 11 or 12, **characterized in that** said recording or reading means further includes first (15) and second (16) registers for communicating, respectively, with said memory (11) and with said transceiver (12, 19) and a sequencer (17) for exchanging the content of said registers.

14. Communication system according to claim 13, **characterized in that** said sequencer is connected to a page counter (18) which indicates the page of data in the memory (11).

15. Communication system according to claim 8, **characterized in that** said PC (U2) includes an application programme (23) dedicated to processing said data for the purpose of the transmission or reception thereof by said transceiver and for the purpose of the exploitation thereof after reception or transmission by said transceiver and **in that** said application programme is in communication with said transceiver (19) via a driver programme (22).

16. Communication system according to claim 15, **characterized in that** said transceiver (19) and said time base (20) of said second unit (U2) are mounted in a component able to be plugged into a peripheral port of said second unit.

## Patentansprüche

1. System zur Kommunikation zwischen einer ersten Einheit (U1) und einer zweiten Einheit (U2), wovon jede einen Funkwellen-Sender/Empfänger (12, 19), der mit einer gemeinsamen Hochfrequenz-Trägerwelle arbeitet, die zu der anderen Einheit zu schickende Informationen transportieren sollen, und einen Zeitgeber (1, 20), anhand dessen die Trägerwelle abgeleitet wird, umfaßt; wobei die Zeitgeber (1, 20) der ersten und der zweiten Einheit wenigstens ungefähr gleiche Frequenzdrifts besitzen, **dadurch gekennzeichnet, daß** der Sender/Empfänger (12, 19) jeder der Einheiten so beschaffen ist, daß er mehrere Hochfrequenz-Trägerwellen erzeugen kann, und daß jede der Einheiten Auswahlmittel (14) für die Auswahl einer gemeinsamen Arbeitsträgerwelle zum Senden und Empfangen der Informationen aus den mehreren Hochfrequenz-Trägerwellen umfaßt.

2. Kommunikationssystem nach Anspruch 1, **dadurch gekennzeichnet, daß** wenigstens die zweite Einheit (U2) so beschaffen ist, daß ihre Auswahlmittel die Frequenz einer gemeinsamen Arbeitsträgerwelle auswählen, und daß wenigstens die erste Einheit (U1) so beschaffen ist, daß ihre Auswahlmittel die Frequenzen der mehreren Trägerwellen abtasten, um die gemeinsame Arbeitsträgerwelle, die von der zweiten Einheit ausgewählt ist, zu erfassen.

3. Kommunikationssystem nach Anspruch 2, **dadurch gekennzeichnet, daß** wenigstens die zweite Einheit (U1) außerdem so beschaffen ist, daß sie die benutzten Trägerwellen unter den mehreren Trägerwellen erfassen kann, und daß die gemeinsame Arbeitsträgerwelle eine freie Trägerwelle ist.

4. Kommunikationssystem nach Anspruch 1, **dadurch gekennzeichnet, daß** die zweite Einheit (U2) als Master-Einheit definiert und so beschaffen ist, daß ihre Auswahlmittel die Frequenz einer gemeinsamen Arbeitsträgerwelle auswählen, und daß die erste Einheit (U1) als Slave-Einheit definiert und so beschaffen ist, daß ihre Auswahlmittel die Frequenzen der mehreren Trägerwellen abtasten, um die gemeinsame Arbeitsträgerwelle, die von der Master-Einheit ausgewählt ist, zu erfassen.

5. Kommunikationssystem nach Anspruch 4, **dadurch gekennzeichnet, daß** die Master-Einheit (U2) außerdem so beschaffen ist, daß sie die benutzten Trägerwellen unter den mehreren Trägerwellen erfassen kann, und daß die gemeinsame Arbeitsträgerwelle eine freie Trägerwelle ist.

6. Kommunikationssystem nach einem der Ansprüche 2 bis 5, **dadurch gekennzeichnet, daß** wenigstens die erste Einheit (U1) außerdem Mittel (6) umfaßt, die die Abtastung der Auswahlmittel (14) aktivieren, wobei diese Abtastung der Auswahlmittel am Ende eines bestimmten Intervalls deaktiviert wird, falls keine Nachricht wiedererkannt wird.

7. Kommunikationssystem nach einem der Ansprüche 1 bis 6, **dadurch gekennzeichnet, daß** die erste Einheit (U1) eine Uhr ist, deren Zeitgeber sowohl der Lieferung der Zeitüberwachungs-Standardfrequenz als auch der Ableitung der Hochfrequenz-Trägerwelle(n) dient.

8. Kommunikationssystem nach einem der Ansprüche 1 bis 7, **dadurch gekennzeichnet, daß** die zweite Einheit (U2) ein Personalcomputer ist.

9. Kommunikationssystem nach einem der vorhergehenden Ansprüche, **dadurch gekennzeichnet, daß** die Zeitgeber (1, 19) thermisch kompensiert sind.

10. Kommunikationssystem nach einem der vorhergehenden Ansprüche, **dadurch gekennzeichnet, daß** die zwischen den beiden Einheiten (U1, U2) auszutauschenden Informationen auf der gemeinsamen Arbeitsträgerwelle durch Informationspakete codiert sind und daß die Einheit (U1) Mittel (2, 10, 11) zum Aufzeichnen oder Lesen der Informationen in Abhängigkeit vom Typ und von der Größe der Pakete umfaßt.

11. Kommunikationssystem nach Anspruch 10, **dadurch gekennzeichnet, daß** die Aufzeichnungsmittel einen Speicher umfassen, der in Seiten (11) organisiert ist und in den die Informationspakete in Einheiten von einem Paket pro Seite aufgezeichnet werden.

12. Kommunikationssystem nach Anspruch 11, **dadurch gekennzeichnet, daß** der Seitenspeicher (11) ein nichtflüchtiger Speicher ist.

13. Kommunikationssystem nach Anspruch 11 oder 12, **dadurch gekennzeichnet, daß** die Aufzeichnungs- oder Lesemittel außerdem ein erstes Register (15) und ein zweites Register (16) für die Kommunikation mit dem Speicher (11) bzw. mit dem Sender/Empfänger (12, 19) sowie eine Folgesteuerung (17) zum Austauschen des Inhalts der Register umfassen.

14. Kommunikationssystem nach Anspruch 13, **dadurch gekennzeichnet, daß** die Folgesteuerung an einen Seitenzähler (18) angeschlossen ist, der auf die Datenseiten in dem Speicher (11) zeigt.

15. Kommunikationssystem nach Anspruch 8, **dadurch gekennzeichnet, daß** der Personalcomputer (U2) ein für die Verarbeitung der Informationen bestimmtes Anwendungsprogramm (23) enthält, um die Informationen von dem Sender/Empfänger zu senden bzw. zu empfangen und um sie nach dem Empfang oder dem Senden durch den Sender/Empfänger auszuwerten, und daß das Anwendungsprogramm mit dem Sender/Empfänger (19) über ein Steuerprogramm (22) kommuniziert.

16. Kommunikationssystem nach Anspruch 15, **dadurch gekennzeichnet, daß** der Sender/Empfänger (19) und der Zeitgeber (20) der zweiten Einheit (U2) in einer Komponente angebracht sind, die in einen Peripheriegerät-Port dieser zweiten Einheit einsteckbar ist.
